# EUROPEAN PATENT SPECIFICATION

(11) **EP 3 029 850 B1**
(45) Date of publication and mention of the grant of the patent: **26.09.2018**
(21) Application number: 15197862.4
(22) Date of filing: 03.12.2015
(51) Int. Cl.: H04B 7/06, H04W 16/28

(54) **MULTI-FREQUENCY DIRECTIONAL ACCESS POINT COMMUNICATION**
KOMMUNIKATION MIT DIREKTIONALEM MULTIFREQUENZZUGANGSPUNKT
COMMUNICATION DE POINT D'ACCÈS DIRECTIONNEL MULTIFRÉQUENCE

(30) Priority: 04.12.2014 US 201462087423 P; 23.11.2015 US 201514948849; 01.12.2015 WO PCT/US2015/063255
(43) Date of publication of application: 08.06.2016
(73) Proprietor: Facebook, Inc., Menlo Park, CA 94025 (US)
(72) Inventor: AKHI, Fraidun, Menlo Park, California 94025 (US); MCMILIN, Emily Beth, Menlo Park, California 94025 (US); COOK, Jonathan Richard, Menlo Park, California 94025 (US)
(74) Representative: Schröer, Gernot H.

(56) References cited:
- WO-A1-2011/000391
- WO-A1-2014/151951
- US-A1- 2013 077 554
- US-A1- 2014 148 107

## Description

### TECHNICAL FIELD

The present disclosure relates to systems and methods for communicating between an access point (AP) and one or more user devices across various wireless radiofrequency channels.

### BACKGROUND

Users increasingly demand ubiquitous wireless coverage for their devices and resist limitations on their bandwidth or maximum range. Television White Space (TVWS) frequencies may soon supplement available frequencies to further accommodate this demand. Although the 802.11 af standard defining certain aspects of TVWS may be referred to as "Super-WIFI" in some organizations, for the purposes of this document, "TVWS" generally refers to frequency ranges below approximately 700Mhz while "WIFI" generally refers to frequencies within +/- 0.8 GHz of 2.4GHz and within +/- 0.8 GHz of 5GHz. As TVWS ranges (e.g., the upper 500-700Mhz bands) are generally at lower frequencies than, e.g., WIFI signals (communications using approximately 2.4GHz and 5GHz), the TVWS signals may be able to travel further distances and pass through thicker media than higher frequency channels. Unfortunately, the lower frequency TVWS channels may be less amenable to higher bandwidth applications.

Device manufacturers commonly employ "chipsets" provided by various companies, e.g., for digital communications. For example, chipsets exist for IEEE 802.11 WIFI, cellular communications, etc. Although some chipsets may soon provide the ability to alternate between TVWS and WIFI communication channels, it is unclear how the channels should be used and how traffic should be allocated between them. Suboptimal application of the TVWS and WIFI capabilities may result in little improvement over previous approaches despite the substitution of the new chipsets or modification of existing chipsets. Accordingly, there is a need for systems and methods supplementing user connectivity with these new channels, while acknowledging their relative benefits and limitations.

Document US 2014/0148107 A1 describes a communication device that communicates with other communication devices in a wireless network using a first and a second frequency band. Inter-band beamforming assistance may be provided by the lower frequency band, wherein a second frequency band may be used for communication, and a first frequency band, lower than said second frequency band may be used, for another signal. The first frequency band may be used for beamforming assistance for the second frequency band in a dual band millimeter-wave system using collocated transmitters.

Document US 2013/0077554 A1 describes techniques for managing aggregation using an anchor channel over a first frequency band as the anchor band between an Access Point and a wireless receiver/transmitter unit (WTRU). The WRTU may receive one or more beacons via the anchor channel, where the one or more beacons may provide allocation information for allocating a supplementary channel on a second frequency band as a supplementary band that may be different from the first frequency band. The supplementary channel may be established over the supplementary band using the allocation information provided in the one or more beacons. Data may be exchanged over the established supplementary channel on the supplementary band.

### SUMMARY OF PARTICULAR EMBODIMENTS

The present invention is defined by the appended claims. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

In an example, an access point may comprise:
a first antenna configured for transmission using a Television White Space (TVWS) frequency;
an antenna array configured for directional transmission on a WIFI frequency; and
one or more processors configured to:
   receive a first message from a user device using a TVWS frequency;
   determine location information associated with the user device;
   the location information received from the user device (115, 120) via one or more TVWS packets or by accessing a geolocation database with the user device's approximate location based on one or more TVWS packets;
   determine a beam-steering configuration based upon the location information; and
   transmit a second message on the WIFI frequency to the user device using the beam steering configuration and the antenna array.

The location information may be a direction and determining location information may comprise receiving the first message at two antennae in succession.

In an example, the one or more processors further may be configured to wait for a period in excess of a hysteresis window before transmitting the second message on the WIFI frequency, the hysteresis window may correspond to a transition from TVWS to WIFI capabilities on one or more chips and one or more antennas.

The location information may be a position retrieved from a TVWS database.

In an example, an access point further may comprise a second antenna configured to provide omnidirectional wireless communication, wherein a range of the second antenna may be more than approximately twenty percent of a range of the first antenna.

A range of the antenna array may be at least 90 percent of the range of the first antenna.

In an example, a method further may comprise:
receiving uplink communications from the user device exclusively on TVWS frequencies; and
sending downlink communications to the user device exclusively on WIFI frequencies using the beam-steering configuration.

In an example, a user communications device may comprise:
at least one processor;
at least one memory comprising instructions configured to cause the at least one processor to perform a method comprising:
   providing location information to an access point using a TVWS frequency, the location information provided via one or more TVWS packets or by providing access to a geolocation database with the user device's approximate location based on one or more TVWS packets; and
   receiving a beam-steered communication using a WIFI frequency based upon the location information.

In an example, a user communications device further may comprise an array configured to provide beam-steered communication using the WIFI frequency and an omnidirectional antenna configured to provide communication using the TVWS frequency.

The location information may be a position retrieved from a geolocation database.

The location information may comprise a unique identifier associated with the user communications device.

In an example, a method further may comprise:
sending uplink communications to the access point exclusively on TVWS frequencies; and
receiving downlink communications from the access point exclusively on WIFI frequencies using the beam-steering configuration.

The downlink communications may comprise CSMA/CA signaling and channel control data.

In an example, a computer-implemented method may comprise:
receiving a first message from a user device using a TVWS frequency;
determining location information associated with the user device, the location information received from the user device (115, 120) via one or more TVWS packets or by accessing a geolocation database with the user device's approximate location based on one or more TVWS packets;
determining a beam-steering configuration based upon the location information; and
transmitting a second message using a WIFI frequency to the user device using the beam steering configuration.

The location information may be a direction and determining location information may comprise receiving the first message at two antennae in succession.

In an example, a computer-implemented method further may comprise waiting for a period in excess of a hysteresis window before transmitting the second message on the WIFI frequency, the hysteresis sis window may correspond to a transition from TVWS to WIFI capabilities on one or more chips and one or more antennas.

The location information may be a position retrieved from a TVWS database.

In an embodiment according to the invention a computer-implemented method further may comprise
receiving uplink communications from the user device exclusively on TVWS frequencies; and
sending downlink communications to the user device exclusively on WIFI frequencies using the beam-steering configuration.

In an embodiment according to the invention a computer-implemented method further may comprise:
transmitting CSMA/CA signaling and channel control data using the beam-steering configuration.

In an embodiment according to the invention, one or more computer-readable non-transitory storage media may embody software that is operable when executed to perform a method according to the invention or any of the above mentioned embodiments.

In an embodiment according to the invention, a system may comprise: one or more processors; and at least one memory coupled to the processors and comprising instructions executable by the processors, the processors operable when executing the instructions to perform a method according to the invention or any of the above mentioned embodiments.

In an embodiment according to the invention, a computer program product, preferably comprising a computer-readable non-transitory storage media, may be operable when executed on a data processing system to perform a method according to the invention or any of the above mentioned embodiments.

### BRIEF DESCRIPTION OF THE DRAWINGS

The embodiments introduced here may be better understood by referring to the following Detailed Description in conjunction with the accompanying drawings, in which like reference numerals indicate identical or functionally similar elements:
- FIG. 1: is a block diagram illustrating a topology for a dual WIFI / TVWS access point and various dual WIFI / TVWS devices as may occur in some embodiments;
- FIG. 2: is a block diagram illustrating various components from the topology of FIG. 1, wherein a user device and an access point engage in a TVWS exchange as may occur in some embodiments;
- FIG. 3: is a block diagram illustrating the topology of FIG. 1, wherein an access point provides directional WIFI coverage to a user device as may occur in some embodiments;
- FIG. 4: is a block diagram illustrating various components from the topology of FIG. 1, wherein an access point employs beam steering to provide directional WIFI coverage to a plurality of user devices as may occur in some embodiments;
- FIG. 5: is a block diagram illustrating various components from the topology of FIG. 1, wherein an access point employs beam steering and beam forming to provide directional WIFI coverage to a plurality of user devices as may occur in some embodiments;
- FIG. 6A: is a block diagram illustrating the relative coverage of 2.4GHz/5GHz (WIFI) vs 500MHz (TVWS) channels with one or more omnidirectional wireless antennas as may occur in some embodiments; FIG. 6B is a block diagram illustrating the relative coverage of a directional 2.4GHz signal vs an omnidirectional 500MHz signal as may occur in some embodiments;
- FIG. 7: is a high level block diagram illustrating an example network topology providing uplink and downlink functionality on each of the WIFI and TVWS mediums as may occur in some embodiments;
- FIG. 8: is a flow diagram illustrating a process for managing incoming user devices at an access point as may occur in some embodiments;
- FIG. 9: is a flow diagram illustrating a process for directionally and omnidirectionally managing user devices at an access point as may occur in some embodiments;
- FIG. 10: is a frequency diagram illustrating a downcoversion for converting from 802.11 ac to 802.11 af functionality as may occur in some embodiments;
- FIG. 11: is a table illustrating theoretical data rates for 802.11 ac with a 20-40MHz channel, SISO as may be relevant in some embodiments;
- FIG. 12: is a table illustrating theoretical data rates for 802.11 af with a 6, 7, 8MHz channel, SISO as may be relevant in some embodiments;
- FIG. 13: is a table illustrating rate relations for various SINR and modes as may occur in some embodiments;
- FIG. 14: is a flow diagram illustrating a process for rate scaling as may be implemented in some embodiments; and
- FIG. 15: is a block diagram illustrating a computer system as may be used to implement features of some of the embodiments.

While the flow and sequence diagrams presented herein show an organization designed to make them more comprehensible by a human reader, those skilled in the art will appreciate that actual data structures used to store this information may differ from what is shown, in that they, for example, may be organized in a different manner; may contain more or less information than shown; may be compressed and/or encrypted; etc.

The headings provided herein are for convenience only and do not necessarily affect the scope or meaning of the embodiments. Further, the drawings have not necessarily been drawn to scale. For example, the dimensions of some of the elements in the figures may be expanded or reduced to help improve the understanding of the embodiments. Similarly, some components and/or operations may be separated into different blocks or combined into a single block for the purposes of discussion of some of the embodiments. Moreover, although the various embodiments are amenable to various modifications and alternative forms, specific embodiments have been shown by way of example in the drawings and are described in detail below. The intention, however, is not to limit the particular embodiments described.

### DETAILED DESCRIPTION

TV White Space (TVWS) frequencies more easily penetrate physical objects and facilitate communication over longer distances than Industrial Scientific and Medical (ISM) frequencies, e.g., as are used in WIFI communications. However, TVWS frequencies generally accommodate less bandwidth than ISM frequencies. Various of the disclosed embodiments segregate communications between a base station access point and a user device to take advantage of each frequency band's benefits. Particularly, universal broadcasts to client devices, low throughput communications (e.g., uplink communications from the user device to the access point), and initial user device detection may be accomplished using omnidirectional TVWS broadcasts. In contrast, bandwidth intensive communications (e.g., downlink communications from the access point to the user device) may be handled with directional, beam-steered WIFI channels (e.g., WIFI communicating antennas which interfere with one another so as to create directional gain). The base station may coordinate steering based upon user device information, such as location information. Improvements for beam forming, packet handling at the base station, and device association with the directional communications are also considered.

Various examples of the disclosed embodiments will now be described in further detail. The following description provides specific details for a thorough understanding and enabling description of these examples. One skilled in the relevant art will understand, however, that the embodiments discussed herein may be practiced without many of these details. Likewise, one skilled in the relevant art will also understand that the embodiments can include many other obvious features not described in detail herein. Additionally, some well-known structures or functions may not be shown or described in detail below, so as to avoid unnecessarily obscuring the relevant description.

The terminology used below is to be interpreted in its broadest reasonable manner, even though it is being used in conjunction with a detailed description of certain specific examples of the embodiments. Indeed, certain terms may even be emphasized below; however, any terminology intended to be interpreted in any restricted manner will be overtly and specifically defined as such in this section.

### Overview - Example Topology

Much of the TVWS spectrum may be presently unused. For example, in the United States portions of the spectrum for TV below 700MHz are still available and are not officially associated with any particular application. In some instances, the channels in this portion may be 6MHz wide.

The 802.11 af and 802.22 standards propose transmitting data in this available spectrum. In some proposed implementations of these standards, a device would sense the unoccupied channels and allocate those for use. A database (e.g., a geodatabase) may be used to consolidate and track user device locations and channel availability.

Device-based chipsets may provide operation in the TVWS range in the near future. These systems may add TVWS functionality to an existing WIFI chipset (e.g., they may implement aspects of 802.11 af). For example, these chipsets may use TVWS as a fallback when WIFI coverage degrades. TVWS may facilitate this fallback as TVWS achieves a much larger range (e.g., lower frequencies which can permeate walls).

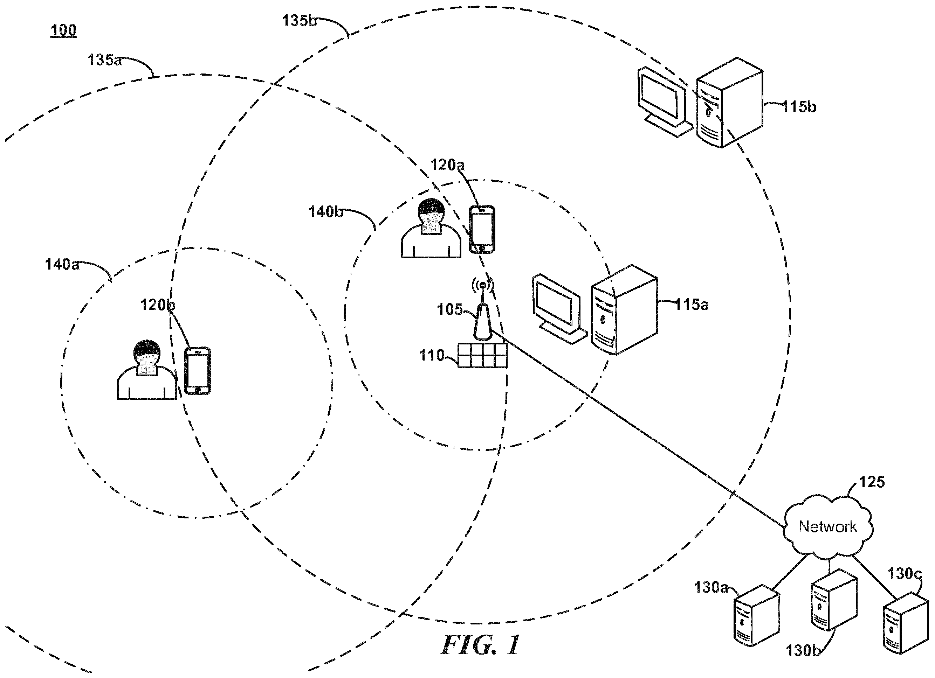

FIG. 1 is a block diagram illustrating a topology between a dual WIFI / TVWS access point and various dual WIFI / TVWS devices as may occur in some embodiments (one will recognize that the "access point" as referred to herein, may be a base station, an eNodeB, etc.). Mobile user devices **120a,b** and stationary devices **115a,b** may seek to connect with an access point **105** e.g., to communicate across a network **125** (such as the Internet) with third party servers **130a-c.** However, while devices **120a** and **115a** are within the access point's **105** WIFI range **140b** the devices **115b** and **120b** may be beyond the WIFI range **140b** (e,g, device **120b** may have a WIFI range **140a** which is too small to acquire a signal from the access point **105**). The devices **115b** and **120b** are still within the TVWS range **135b** of the access point **105** though (likewise, the access point **105** may be within the TVWS range **140a** of the device **120b**). Accordingly, various embodiments perform initial communications (e.g., the access point's discovery of the user device's existence) using TVWS. While the access point's omnidirectional WIFI range may not extend to the user devices **120b** and **115b** the access point **105** may include an antenna array **110** facilitating focused beam steering and/or beam forming in the WIFI band (some embodiments may also employ multiple antennae for the TVWS bands).

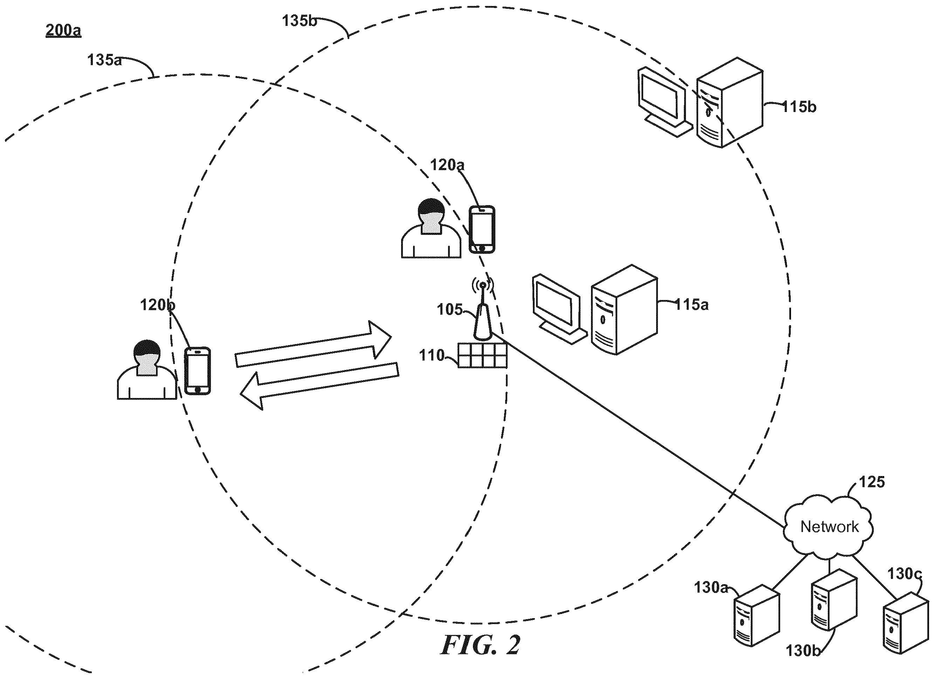

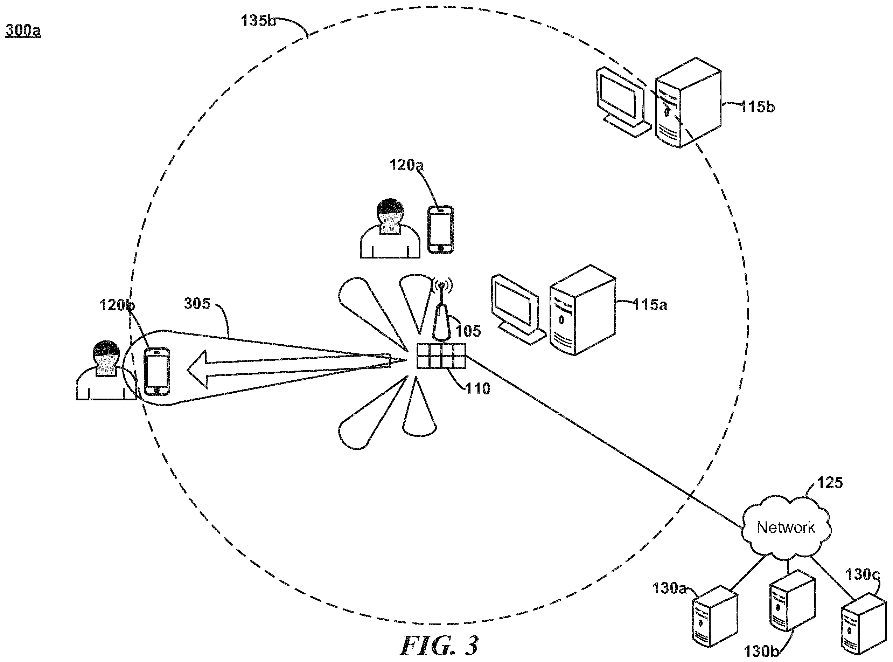

FIG. 2 is a block diagram illustrating various components from the topology of FIG. 1, wherein a user device and an access point engage in a TVWS exchange as may occur in some embodiments. In FIG. 2 a user device **120b** and an access point **105** engage in a TVWS exchange. In some embodiments, the access point may detect the existence of the user device on the TVWS channel, e.g., although the user device **120b** emits omnidirectional TVWS packets (or vice versa while the access point **105** emits TVWS packets). The user device **120b** may convey information regarding the user device's location to the access point via the TVWS packets. Alternatively, the access point may be able to access a geodatabase with the user device's approximate location based on the TVWS packet (e.g., a serve device **130b**). FIG. 3 is a block diagram illustrating the topology of FIG. 1, wherein an access point provides directional WIFI coverage to a user device as may occur in some embodiments. For example, following the detection of the user device **120b** the access point **105** may use the antenna array **110** to steer a directional beam **305** in the WIFI channel to the user device **120b.** Traffic intensive communications (e.g., applications that exchange a large volume of data) may occur on this directional beam while lower priority communications can occur on the omnidirectional TVWS channel.

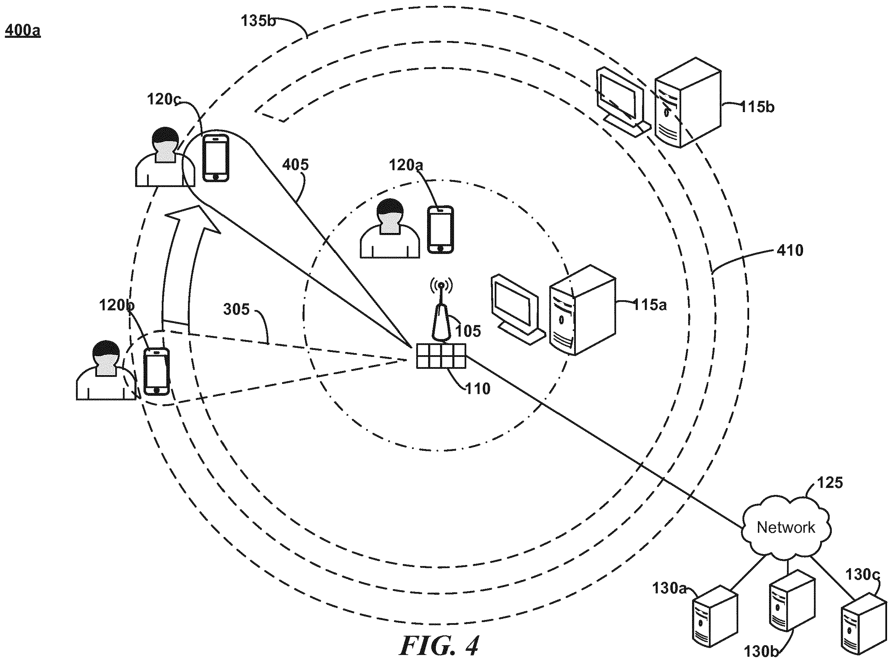

FIG. 4 is a block diagram illustrating various components from the topology of FIG. 1, wherein an access point employs beam steering to provide directional WIFI coverage to a plurality of user devices as may occur in some embodiments. For example, the access point **105** has steered the beam **405** from user device **120b** to user device **120c.** Directional coverage may be actively provided to each user device in succession (e.g., the access point may iterate through the known user devices and provide receptivity throughout the entire range **410**).

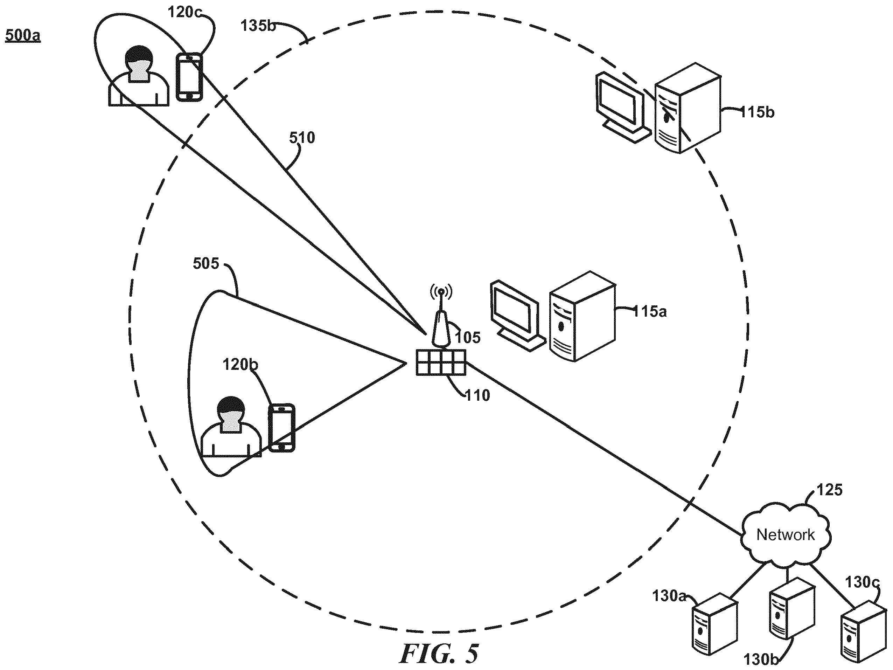

FIG. 5 is a block diagram illustrating various components from the topology of FIG. 1, wherein an access point **105** employs beam steering and beamforming to provide directional WIFI coverage to a plurality of user devices as may occur in some embodiments. Particularly, some embodiments may employ both beamforming and beam steering to optimize reception at various user devices. A narrower, further-reaching beam **510** may be applied to communicate with user device **120c,** but a wider, more proximate beam **505** may be used to communicate with device **120b.** Beam forming may be applied to avoid interference between neighboring user devices. In some embodiments, the WIFI beamformed range may be commensurate with the TVWS range, while in other embodiments the WIFI beam formed range may precede or reach beyond the TVWS range. Though depicted here simultaneously, one will recognize that the beams **505** and **510** may occur at different times (e.g., they may be formed in succession by the array **110**).

### Relative Coverage

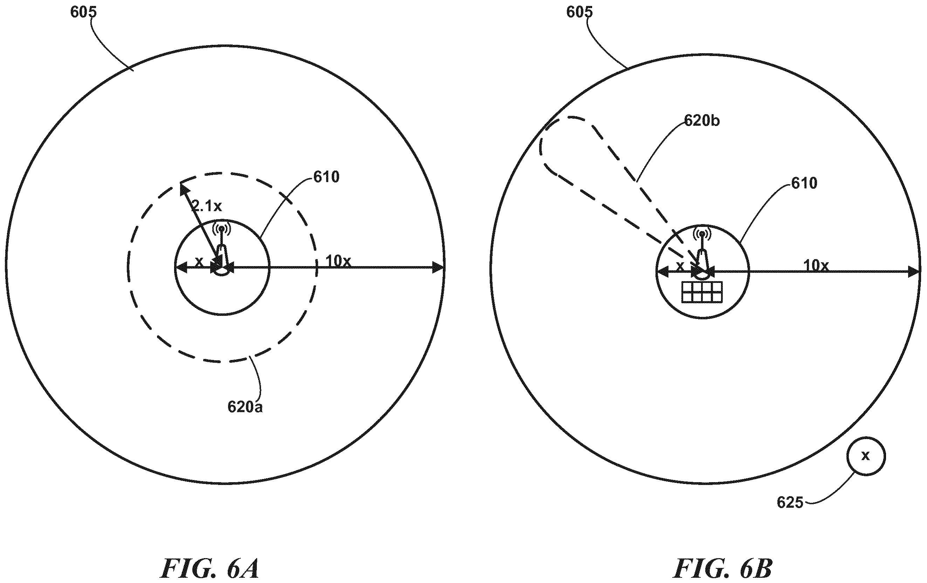

FIG. 6A illustrates the relative coverage of 2.4GHz/5GHz (WIFI) vs 500MHz (TVWS) channels with one or more omnidirectional wireless antennas as may occur in some embodiments. Circle **605** reflects an example TVWS range about an access point which may be via a 4dBi omnidirectional antenna operating at 500MHz. Circle **610** reflects an example range of a 4dBi omnidirectional antenna operating at 5.4GHz. Circle **620a** reflects an example range of an 18dBi omnidirectional antenna operating at 2.4 GHz. As indicated, the range corresponding to circle **620a** is 2.1 times the range corresponding to circle **610.** Similarly, the circle **605** corresponds to a range roughly 10 times the range corresponding to circle **610.**

Some embodiments employ Broadcom®'s and/or MediaTek®'s 2016 triband chips to cover TVWS functionality as described herein. Embodiments may enable WIFI to beam-steer high bandwidth signals within a large ad-hoc cell. Some embodiments may provide almost 100% reduction in Carrier Sense Multiple Access (CSMA)/CA overhead which reduces throughput and can cause congestion collapse (e.g., if too many WIFI user devices are in a network). Thus, a TVWS connection between a user device and an access point may be used for: uplink signals; new user device discovery; geo-locating user devices; closing the link for broadcast messages and Request-To-Send/Clear-To-Send (RTS/CTS) messages from user devices; handling CSMA/CA signaling; etc.

FIG. 6B illustrates the relative coverage of a directional 2.4GHz/5GHz signal vs an omnidirectional 500MHz signal as may occur in some embodiments. Directional coverage **620b** may reflect an 18dBi gain for 2.4GHz directional signal as achieved using, e.g., an antenna array in some embodiments. If a user device is located in the region **625,** outside the TVWS range of circle **605,** it may be undetected by the access point until the beam associated with directional coverage **620b** is steered in its direction. It may be the case that signals cannot be transmitted from the user device to the access point at this distance (e.g., as the 2.4GHz signal received at the access point is below the noise floor).

Some omnidirectional WIFI systems use CSMA/CA with multiple nodes. However, multiple nodes with directional antennas may present a situation where the antennas are unable to sense one another. In these situations, CSMA may not work as well as desired (e.g., collisions may occur but the devices controlling the antennas will remain unaware of the other antennas' existence). By using directional transmissions, e.g., using beam steering, these issues may be mitigated. TVWS, because of its increased range, may instead employ an omnidirectional antenna and thereby apply CSMA without these difficulties.

### Network Topology

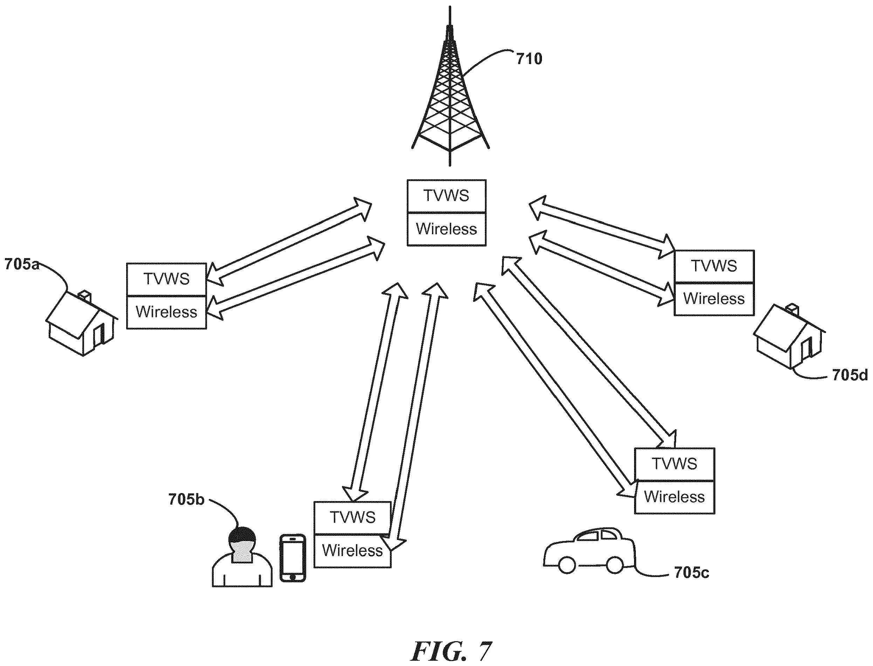

FIG. 7 is a high level block diagram illustrating an example network topology providing uplink (from the client devices to the access point) and downlink (from the access point to the client devices) functionality on each of the WIFI and TVWS mediums as may occur in some embodiments. An access point **710** may communicate with moving vehicles **705c,** various user devices **705b,** and stationary residence devices **705a, 705d.** Though depicted here as providing bidirectional communication on each of the TVWS and WIFI channels, one will recognize that in some embodiments only one-directional communication (to or from the access point **710**) may be possible on some channels in some instances.

With regard to the 2.4/5GHz WIFI downlinks, the WIFI downlinks may be directional (e.g., using beam steering) and may transmit the bulk of data with high throughput rates available due to large channel bandwidths at 5GHz or 2.4GHz. The WIFI downlink need not be CSMA/CA in some embodiments, but can default to a more general Time Division Multiple Access (TDMA) scheme, e.g., without collision avoidance or carrier sensing. The beamforming to the user devices may be based on the initial location fix derived from TVWS geo-location reported data. Further with regard to the wireless downlink, rather than simply partition one band for downlink and one band for uplink, some embodiments partition based upon Quality of Service (QoS) requirements. High throughput data with (arguably) slower latency requirements may be communicated using the 2.4GHz/5GHz channels. Low throughput data with faster latency requirements may use the TVWS channels. For example, in some embodiments, all the uplink operations and all other CSMA/CA control signaling may occur on the TVWS channels as these operations are generally lower throughput. The WIFI uplink may be unused or may be used to perform a periodic carrier sense of external interference (e.g., from other access points).

With regard to the TVWS downlink, the downlink may broadcast CSMA/CA signaling and channel control features including BTS ACKs and RTS/CTS. With regard to the TVWS uplink, the uplink may transmit lower bandwidth uplink data with lower throughput rates as the channel bandwidths may be smaller. The uplink may carry all signaling required by MAC, e.g.: ACKs from a user device to acknowledge downlink data received; RTS/CTS; etc. The TVWS uplink may follow all CSMA/CA back-offs required by MAC, e.g.: waiting/sensing during DIFS, random/exponential back-off intervals; listens to beacons from new user devices, etc.

### Example Incoming User Device Management Process

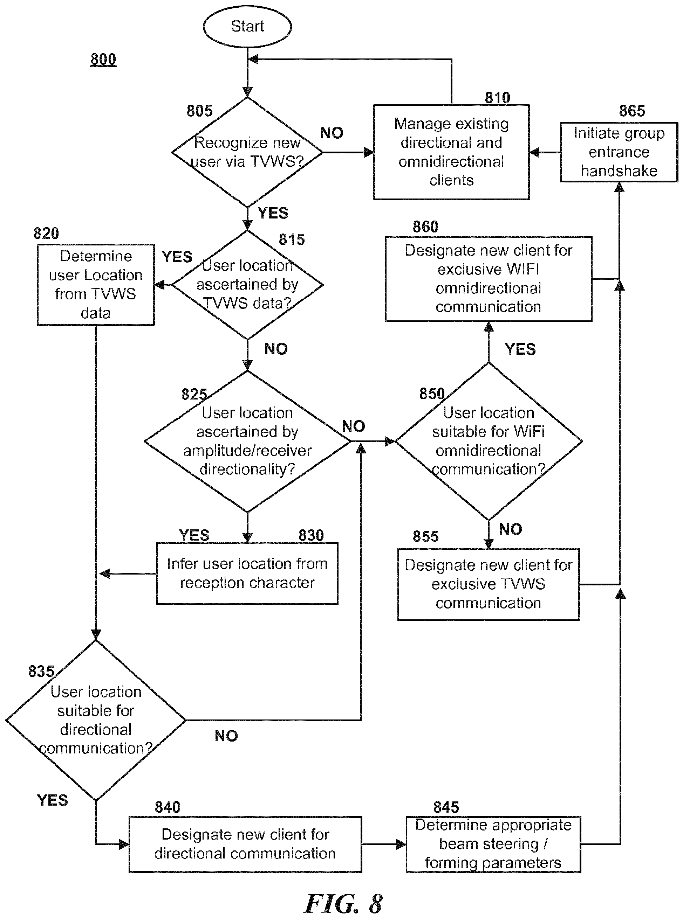

FIG. 8 is a flow diagram illustrating a process for managing incoming user devices at an access point as may occur in some embodiments. At block **805,** the access point system may recognize a new user device via TVWS. If a new user has not been detected, the access point may manage existing directional and non-directional clients at block **810** (e.g., via standard omnidirectional 802.11 ac/802.11 af operations supplemented with occasional beam-steered transmissions, depending upon the client device's location).

If a new user is detected at block **815,** the system may determine whether the user device's location can be ascertained from the TVWS data at block **820** (e.g., from the packet contents itself, or by reference to a geodatabase). If the user's location cannot be inferred based on the TVWS data at block **815,** at block **825** the system may seek to ascertain the user device's location based on the amplitude/receiver directionality (e.g., if multiple TVWS antennas are available, the system may seek to determine the directionality by comparing the arrival times of the signals and the distance to the user based on the received amplitude). If the user location can be detected based on the TVWS receiver directionality, the system may infer the user's location at block **830.**

If the user's location was identified and found suitable for directional communication at block **835** (e.g., being within range of directional WIFI, having a sufficiently precise location determination, etc.) the system may designate the new client as being suitable for directional communication at block **840.** At block **845,** the system may determine the appropriate beam steering/forming parameters for the new device based upon its location and/or the location of other user devices in the area.

If the new user device's location could not be established, some embodiments may seek to determine if omnidirectional WIFI communication will suffice for the new user device at block **850.** If the new device is within omnidirectional range, then WIFI communication may be used at block **860.** In contrast, communication with the device may continue exclusively on TVWS at block **855.** The user device may then be initiated into the network at block **865.** The new device's designation may be periodically reassessed during the management of existing devices within the network at block **810.**

### Example Directionality Management Process

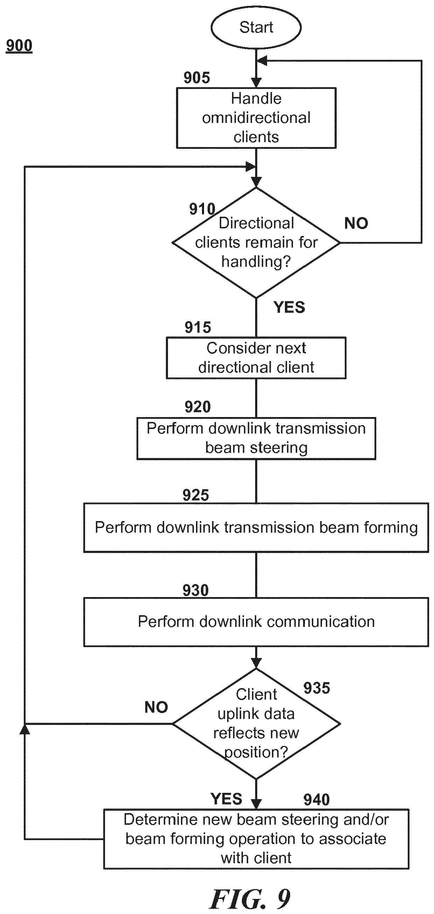

FIG. 9 is a flow diagram illustrating a process for directionally and omnidirectionally managing user devices at an access point as may occur in some embodiments. At block **905,** the system may handle omnidirectional clients (e.g., communicating with them on the omnidirectional WIFI network in accordance with an Ethernet protocol). If there are directional clients to handle at block **910,** the system may consider the next directional client at block **915** and perform beam steering to that client at block **920.** If desired, in some embodiments beamforming may also be performed at block **925** (e.g., to avoid interference with nearby user devices or access points). At block **930,** the downlink communication from the access point to the user device across the directional WIFI signal may be performed. If the uplink client data reflects a new positon at block **935** the system may adjust the corresponding beam steering/formation at block **940** based on the new relative position. One will recognize that the adjustments based upon the uplink data may occur before each beam steering/forming in some embodiments. In some embodiments, the adjustments may occur without regard to the uplink data, e.g., based on changes in the environment, new data in a geodatabase, changes in bandwidth demand, etc.

### Chipset Repurposinq

As mentioned herein, some use a chipset that provides both WIFI and TVWS capabilities, or multiple chipsets providing individual WIFI and TVWS abilities. However, various embodiments instead seek to repurpose an existing WIFI/radio chipset (e.g., one providing only WIFI capabilities) to operate at a lower spectrum area, such as at TVWS. Various embodiments consider accomplishing this in different schemes.

### Chipset Repurposinq - Example Scheme 1 - Downconversion

In some embodiments, a chipset designed for only WIFI functionality is used to downconvert the signal. This may maintain signal bandwidth, but provide a different carrier frequency (e.g., shifting the carrier frequency down to 500 Mhz but also narrowing the signal down by downclocking at the modulator). Some embodiments sample within the frequency domain to narrow the channel carriers to 6Mhz chunks and then move the chunks down to lower frequencies. Some embodiments perform channel bonding (e.g., combining antenna interfaces to improve throughput). Multiple channel carriers may be used for bonding, e.g., one may bond adjacent channel carriers or aggregate across bands.

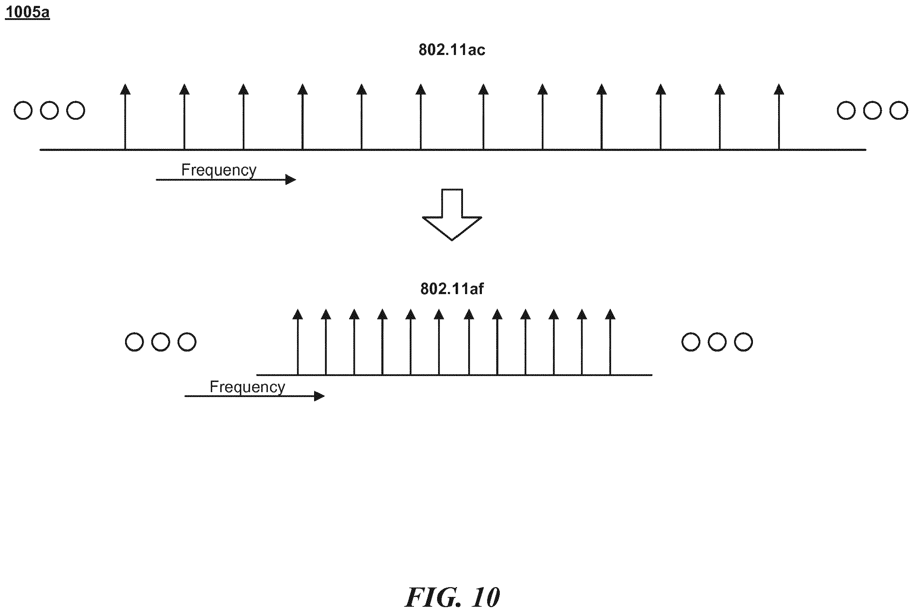

FIG. 10 is a frequency diagram showing a downconversion for converting from 802.11ac to 802.11af functionality as may occur in some embodiments. Some embodiments implement aspects of 802.11 af functionality using an 802.11 ac 40MHz channel PHY, down-clocked by 7.5x. This may generate 6MHz, 7MHz or 8MHz channels, with about 7.5x longer symbol/GI duration. The spectral efficiency between the two may be similar as in 802.11ac (though it may be slightly less in some instances due to longer symbol times). However data rates may scale down accordingly (e.g., due to smaller channel bandwidths).

When transitioning from 802.11 ac to 802.11 af, the 144 carriers may be more widely separated. Subcarrier separation may decrease, but the symbol duration/guard interval may increase (e.g., from 800ns to 6µs). Spectral efficiency may decrease (e.g., ∼ 12%) and the channel bandwidth may also decrease (e.g., from 40MHz to 6MHz). The data rate may scale linearly with channel bandwidth. Accordingly, the traffic allocations between the 2.4Ghz/5Ghz and TVWS channels may consider these differing parameters.

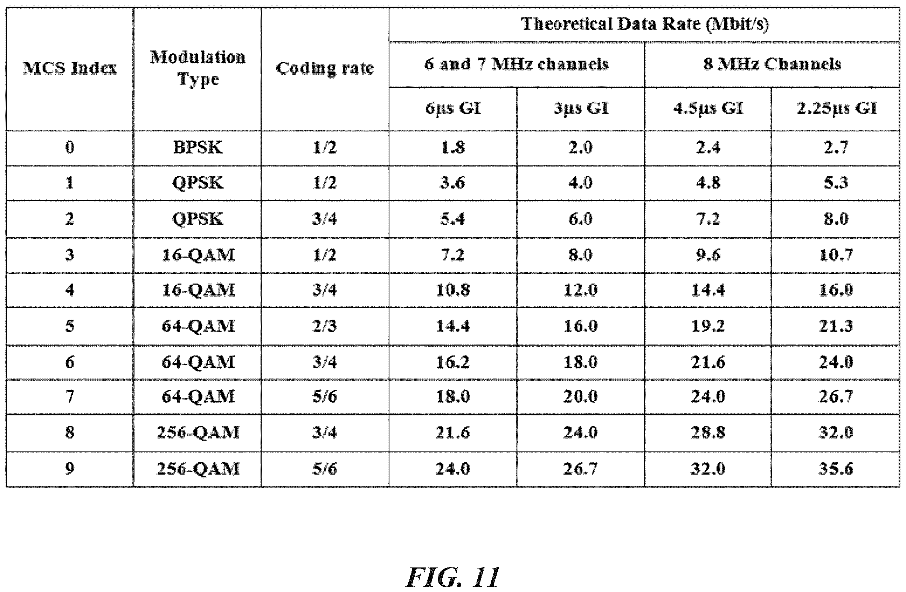

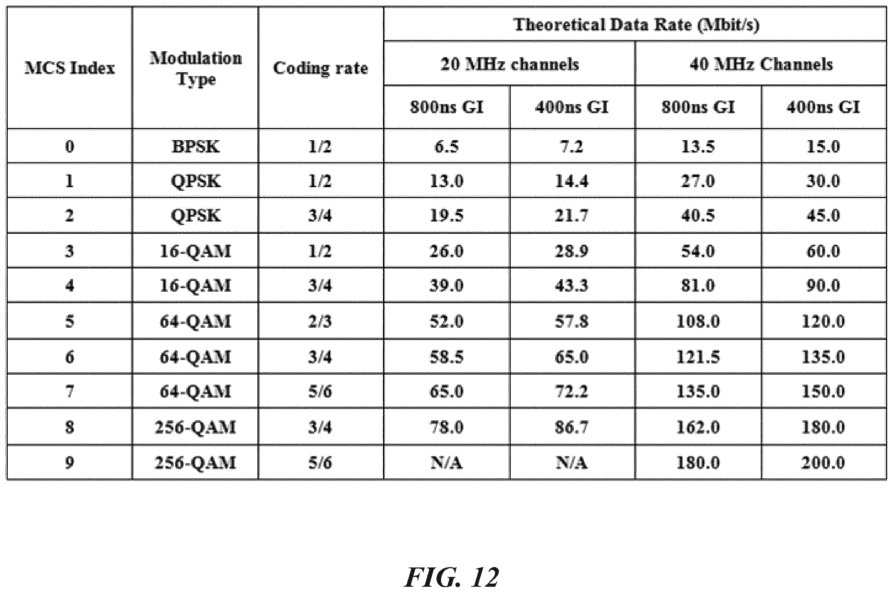

802.11 af may provide spectrum sharing by implementing a geolocation database (e.g., within 50m of actual location) and/or spectrum sensing. 802.11 af may support channel bonding up to 4W, or 2W+2W (where W = 6MHz to 8 MHz based on TV channel width in region). FIG. 11 is a table illustrating theoretical data rates for 802.11 ac with a 20-40MHz channel, SISO as may be relevant in some embodiments. FIG. 12 is a table illustrating theoretical data rates for 802.11 af with a 6, 7, 8MHz channel, SISO as may be relevant in some embodiments.

### Chipset Repurposinq - Example Scheme 2 - Multi-Input-Multi-Output (MIMO)

802.11 af may also support MIMO transmissions (up to 4 spatial streams). Thus, some embodiments have up to 4 spatial streams to multiply the bandwidth by 4. WIFI, having higher throughput than TVWS, may be used for a data-intensive downlink (e.g., when a user streams videos) while a lower throughput/bandwidth uplink from the user device to the access point may use TVWS (e.g., using a dual-mode chipset). Some embodiments may run a QoS assessment to determine which to use - WIFI or TVWS. TVWS may provide considerable physical range and so may be better suited for some tasks than WIFI.

### Signal-To-interference-Plus-Noise (SINR) Table

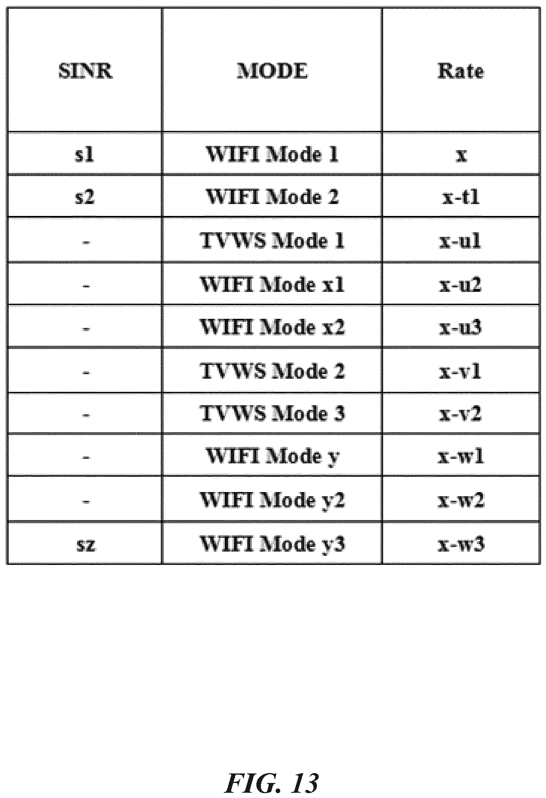

FIG. 13 is a table illustrating rate relations for various SINR and modes as may occur in some embodiments. Provided an SINR, the system can choose a corresponding rate from the rate table. A contention ratio of the channel either in TVWS or WIFI may be factored in, and the maximum achievable rate may be chosen based thereon. The SINR measurement method and rate table format may be hardware specific. For example, they may be based on the implementation of the chipset designer to achieve some desired performance level.

### Access Point Capability

The access point may have one or more TVWS transceivers (500MHz - 700MHz) and one or more WIFI transceivers (2.4GHz and 5GHz).

### User Equipment (UE) Capability

UE capabilities (i.e., user device capabilities) may be determined by the access point based upon whether WIFI alone, or WIFI and TVWS operations are to be performed.

### UE Capability - WIFI Only

Operation by the access point on at least one WIFI channels may be a minimum capability required in some embodiments. For highest backward compatibility, 2.4GHz Wi-Fi may be assumed and referred to herein as 802.11ac, though 802.11a/b/g/n may also be included in some embodiments.

### UE Capability - WIFI Only - Access Point Configuration #1

In these embodiments, the 2.4GHz transceiver may be dedicated to preforming standard 802.11 ac Wi-Fi with clients in this network. Not all embodiments employ 2.4GHz, but may instead use 5GHz. Some embodiments may use both 2.4GHz and 5GHz channels.

### UE Capability - WIFI and TVWS

In some embodiments, the UE may be capable of 2.4GHz, 5GHz, and TVWS (802.11 af) operation. The chipset may be a tri-band covering these 3 spectrum bands.

### UE Capability - WIFI and TVWS - Access Point Configuration #2

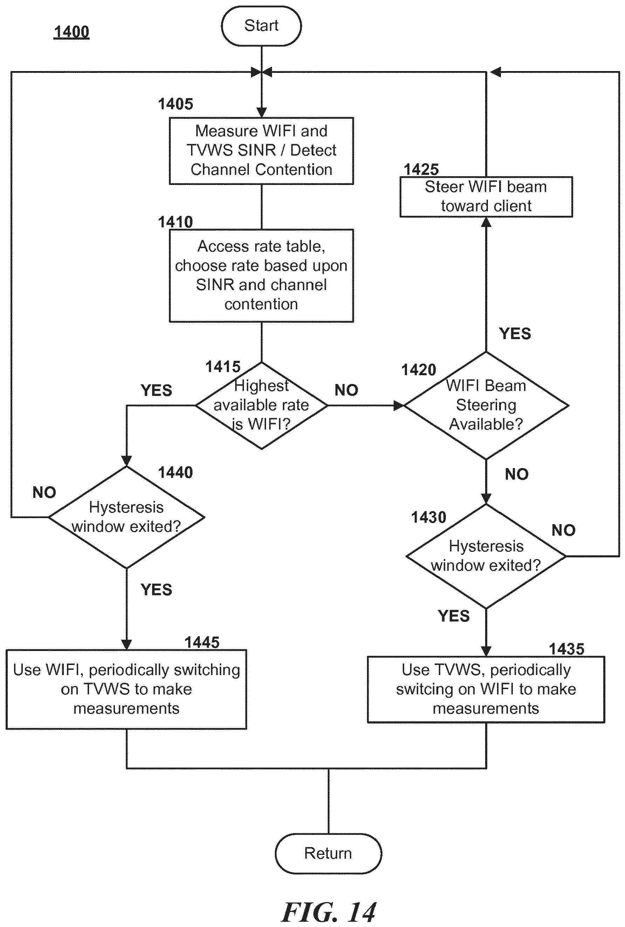

Normal 802.11 ac Wi-Fi on 2.4GHz and 5GHz may be employed in this configuration while the data-rates exceed that of 802.11af (for example when the client is very close to the BTS). 802.11af may instead be applied when the data-rates of 802.11 af exceed that of 802.11 ac (for example when the client is far away from the BTS). FIG. 14 is a flow diagram illustrating a process for rate scaling as may occur in some embodiments. A hysteresis window may be employed as indicated at the access point to prevent "ping-ponging" between TVWS and WIFI configurations in some embodiments (e.g., switching more frequently than desired between the standards when the data rates on TVWS and WIFI are roughly the same). Rather than apply a hysteresis condition, TVWS or WIFI may be preferentially selected as a default when the rates are commensurate, absent congestion. Some embodiments implement the disclosed features as a logical implementation of the MAC layer by tri-band TVWS chip vendors. Various embodiments may be backward compatible with Configuration #1.

In this example process, at block **1405** the system may measure the WIFI and TVWS signal to noise ratio (SINR) and may also detect any possible channel contentions. At block **1410** the system may then access the rate table based upon the determined SINR and channel contentions to determine an appropriate rate. If the highest available rate, as determined from the table, is for WIFI at block **1415** then the system may determine if the hysteresis window has been surpassed at block **1440.** If so, WIFI may be used at block **1445** with periodic TVWS assessments throughout the duration of the communication session.

If instead it was determined at block **1415** that TVWS provided the best possible rate, the system may then determine at block **1420** whether WIFI beam steering is available (in some embodiments beam steering quality may be assessed at this stage to determine if steering is appropriate). If steering is available / appropriate then at block **1425** the access point may apply beam steering to communicate with the client. In contrast, if beam steering is unavailable / insufficient then the system may determine if the hysteresis window was exited at block **1430.** If so, then TVWS may be used at block **1435** with periodic WIFI assessments throughout the duration of the communication session.

### UE Capability - WIFI and TVWS - Access Point Configuration #3

Distinct from time division duplex (TDD) communications which may employed in the above two access point configurations, some embodiments implement a frequency division duplex (FDD) communication mechanism. TVWS frequencies may be used for some specific functions and the 2.4GHz and 5GHz frequencies may be used for a complementary set of functions. The allocation of functions to spectrum frequency bands may be adapted based upon circumstances and may not be completely distinct. For clarification, 2.4GHz and 5GHz frequencies may be referred to herein as "high bands" and the TVWS frequencies may be referred to as the "low bands".

In one possible allocation of functions to frequency bands at the access point, the low band may implement normal 802.11 CSMA/CA Media Access Control (MAC) functionality. These "control" functions may include all the mechanisms required for channel access control (ACKs, back-offs, RTS/CTS, etc.).

The high bands may implement a modified TDMA MAC. This MAC may not use carrier sense and collision avoidance or pre-scheduled (deterministic) time-slots. Instead, the MAC may obey the "control" information conveyed to it from the low band to take care of all intra-cell contention. For inter-cell contention (interference with other networks), the high band transceivers may periodically stop transmission to sense inference from outside networks and may change to an interference-free channel or revert to Configuration #2.

In order to increase the range of the high bands, the access point may use a directional antenna for the high band transceivers. This antenna may employ a traditional phased array to achieve antenna gain in specific desired directions. Deterministic beam-steering of the antenna array may permit antenna gain in the direction of any desired UE. In this case, the RF signals from multiple antennas may be combined prior to the Analog-to-Digital Conversion (ADC), in order to achieve the antenna gain in the desired direction. Multiple transmit/receive chains can also be employed (e.g., in which the signals are combined after the ADC) to achieve SINR gain (e.g., via digital signal processing beamforming) or capacity gain (e.g., via MIMO).

In some embodiments, if there is a mixture of user devices on the network that do and do not have TVWS capabilities: a) For the user devices without TVWS transceivers, the system may follow Configuration #1 in which (most generally) the 2.4GHz transceiver may be used for normal TDD Wi-Fi; b) For the user devices with TVWS transceivers, the 5GHz transceiver may be used for FDD communications discussed herein (in this case "high bands" refers to 5GHz spectrum only).

The antennas at the user devices may be omnidirectional or directional. In some embodiments, when a new client joins the network, the process may follow the normal WIFI MAC protocol (e.g., over low band frequencies). If a client is out of range of the low band frequencies, then the client cannot join the network. The client may provide the access point geo-location information when joining the network or may refer the access point to a grolocation database (e..g, by providing a unique identifier). A client's knowledge of its geo-location is a prerequisite of using TVWS spectrum in some embodiments. This information may be repurposed in some embodiments to steer a high band radiation pattern beam toward the client's geo-location.

Various other possible allocation of functions to frequency bands are consistent with this network topology and infrastructure. For example, functions can be allocated to the low band and high band dynamically, using some predetermined figure of merit. FIG. 14 shows an example where that figure of merit is SINR, however, it could also be other channel quality indicators that are currently employed in the WIFI MAC, or some higher layer measurements, such as total throughput.

### Computer System

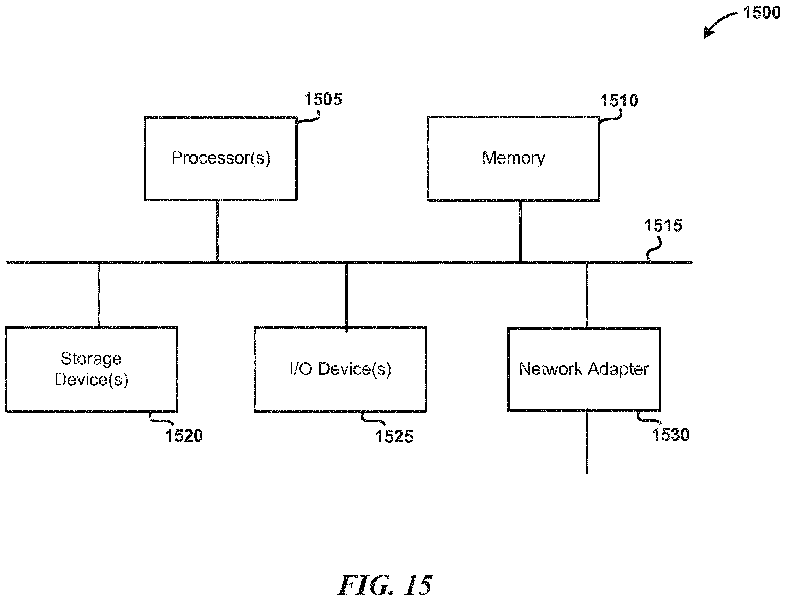

FIG. 15 is a block diagram illustrating a computer system as may be used to implement features of some of the embodiments. The computing system **1500** may include one or more central processing units ("processors") **1505,** memory **1510,** input/output devices **1525** (e.g., keyboard and pointing devices, display devices), storage devices **1520** (e.g., disk drives), and network adapters **1530** (e.g., network interfaces) that are connected to an interconnect **1515.** The interconnect **1515** is illustrated as an abstraction that represents any one or more separate physical buses, point to point connections, or both connected by appropriate bridges, adapters, or controllers. The interconnect **1515,** therefore, may include, for example, a system bus, a Peripheral Component Interconnect (PCI) bus or PCI-Express bus, a HyperTransport or industry standard architecture (ISA) bus, a small computer system interface (SCSI) bus, a universal serial bus (USB), IIC (I2C) bus, or an Institute of Electrical and Electronics Engineers (IEEE) standard 1394 bus, also called "Firewire".

The memory **1510** and storage devices **1520** are computer-readable storage media that may store instructions that implement at least portions of the various embodiments. In addition, the data structures and message structures may be stored or transmitted via a data transmission medium, e.g., a signal on a communications link. Various communications links may be used, e.g., the Internet, a local area network, a wide area network, or a point-to-point dial-up connection. Thus, computer readable media can include computer-readable storage media (e.g., "non transitory" media) and computer-readable transmission media.

The instructions stored in memory **1510** can be implemented as software and/or firmware to program the processor(s) **1505** to carry out actions described above. In some embodiments, such software or firmware may be initially provided to the processing system **1500** by downloading it from a remote system through the computing system **1500** (e.g., via network adapter **1530**).

The various embodiments introduced herein can be implemented by, for example, programmable circuitry (e.g., one or more microprocessors) programmed with software and/or firmware, or entirely in special-purpose hardwired (non-programmable) circuitry, or in a combination of such forms. Special-purpose hardwired circuitry may be in the form of, for example, one or more ASICs, PLDs, FPGAs, etc.

### Remarks

The above description and drawings are illustrative and are not to be construed as limiting. Numerous specific details are described to provide a thorough understanding of the disclosure. However, in certain instances, well-known details are not described in order to avoid obscuring the description. Further, various modifications may be made without deviating from the scope of the embodiments.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that the same thing can be said in more than one way. One will recognize that "memory" is one form of a "storage" and that the terms may on occasion be used interchangeably.

Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any term discussed herein is illustrative only, and is not intended to further limit the scope and meaning of the disclosure or of any exemplified term. Likewise, the disclosure is not limited to various embodiments given in this specification.

Without intent to further limit the scope of the disclosure, examples of instruments, apparatus, methods and their related results according to the embodiments of the present disclosure are given above. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions will control.

## Claims

1. An access point (105), comprising:
a first antenna configured for transmission using a Television White Space (TVWS) frequency;
an antenna array (110) configured for directional transmission on a WIFI frequency, wherein the antenna array (110) is configured to provide an antenna gain based on combining signals from multiple antennas included in the antenna array (110); and
one or more processors configured to:
receive a first message from a user device (115, 120) using a TVWS frequency;
determine location information associated with the user device (115, 120), the location information received from the user device (115, 120) via one or more TVWS packets or by accessing a geolocation database with the user device's approximate location based on one or more TVWS packets;
determine a beam-steering configuration based upon the location information; and
transmit a second message on the WIFI frequency to the user device (115, 120) using the beam steering configuration and the antenna array (110).

2. The access point (105) of Claim 1,
wherein the location information is a position retrieved from a TVWS database; and/or wherein
the access point (105) is configured to receive geo-location information from the user device (115, 120) when the user device joins the network (135) of the access point (105), or is configured to be referred by the user device (115, 120), to a geolocation database, in particular by providing a unique identifier.

3. The access point (105) of Claim 1 or 2, the one or more processors further configured to wait for a period in excess of a hysteresis window before transmitting the second message on the WIFI frequency, the hysteresis window corresponding to a transition from TVWS to WIFI capabilities on one or more chips and one or more antennas.

4. The access point (105) of any of Claims 1 to 3, further comprising a second antenna configured to provide omnidirectional wireless communication, wherein a range of the second antenna is more than twenty percent of a range of the first antenna.

5. The access point (105) of any of Claims 1 to 4, wherein a range of the antenna array is at least 90 percent of the range of the first antenna.

6. The access point of any of Claims 1 to 5, further configured to receive uplink communications from the user device exclusively on TVWS frequencies; and send downlink communications to the user device exclusively on WIFI frequencies using the beam-steering configuration.

7. A user communications device (115, 120), comprising:
at least one processor (1505);
at least one memory (1510) comprising instructions configured to cause the at least one processor (1505) configured to provide via one or more TVWS packets, location information to an access point (105) using a TVWS frequency, wherein the location information is included in the one or more TVWS packets; and receive a beam-steered communication using a WIFI frequency based upon the location information.

8. The user communications (115, 120) device of Claim 7, further comprising an array (110) configured to provide beam-steered communication using the WIFI frequency and an omnidirectional antenna configured to provide communication using the TVWS frequency.

9. The user communications device (115, 120) of Claim 7 or 8, the location information comprising a unique identifier associated with the user communications device (115, 120).

10. The user communications device (115, 120) of any of Claims 7 to 9, further configured to send uplink communications to the access point exclusively on TVWS frequencies; and receive downlink communications from the access point exclusively on WIFI frequencies using the beam-steering configuration.

11. The user communications device (115, 120) of Claim 10, wherein the downlink communications comprise CSMA/CA signaling and channel control data.

12. A computer-implemented method, comprising:
receiving at an access point (105) a first message from a user device (115, 120) using a TVWS frequency;
determining location information associated with the user device (115, 120);
the location information received from the user device (115, 120) via one or more TVWS packets or by accessing a geolocation database with the user device's approximate location based on one or more TVWS packets;
determining a beam-steering configuration based upon the location information; and
transmitting a second message using a WIFI frequency to the user device (115, 120) using the beam steering configuration, wherein the beam steering configuration employs an antenna array (110) configured to provide an antenna gain based on combining signals from multiple antennas included in the antenna array (110).

13. The computer-implemented method of Claim 12,
wherein the location information is a position retrieved from a TVWS database and/or wherein
the access point (105) receives geo-location information from the user device (115, 120) when the user device (115, 120) joins the network (135) of the access point (105), or is referred, by the user device (115, 120), to a geolocation database, in particular by providing a unique identifier..

14. The computer-implemented method of Claim 12 or 13, further comprising waiting for a period in excess of a hysteresis window before transmitting the second message on the WIFI frequency, the hysteresis window corresponding to a transition from TVWS to WIFI capabilities on one or more chips and one or more antennas.

15. The computer-implemented method of any of Claims 12 to 14, the method further comprising:
receiving uplink communications from the user device exclusively on TVWS frequencies; and
sending downlink communications to the user device exclusively on WIFI frequencies using the beam-steering configuration; and/or
the method further comprising
transmitting CSMA/CA signaling and channel control data using the beam-steering configuration.

## Patentansprüche

1. Zugangspunkt (105), umfassend:
eine erste Antenne, die zur Übertragung unter Verwendung einer Rundfunk-White-Space(TVWS)-Frequenz ausgelegt ist;
eine Antennenanordnung (110), die für eine gerichtete Übertragung auf einer WIFI-Frequenz ausgelegt ist, wobei die Antennenanordnung (110) ausgelegt ist, eine Antennenverstärkung auf Grundlage eines Kombinierens von Signalen von mehreren in der Antennenanordnung (110) enthaltenen Antennen bereitzustellen; und
einen oder mehrere Prozessoren, die ausgelegt sind:
unter Verwendung einer TVWS-Frequenz eine erste Nachricht von einem Endgerät (115, 120) zu empfangen;
mit dem Endgerät (115, 120) assoziierte Standortinformationen zu ermitteln, wobei die Standortinformationen vom Endgerät (115, 120) über ein oder mehrere TVWS-Pakete oder durch Zugreifen auf eine Geolokationsdatenbank mit dem ungefähren Standort des Endgeräts auf Grundlage von einem oder mehreren TVWS-Paketen empfangen werden; eine Strahllenkungskonfiguration auf Grundlage der Standortinformationen zu ermitteln; und
eine zweite Nachricht auf der WIFI-Frequenz unter Verwendung der Strahllenkungskonfiguration und der Antennenanordnung (110) an das Endgerät (115, 120) zu übertragen.

2. Zugangspunkt (105) nach Anspruch 1,
wobei die Standortinformationen eine Position sind, die aus einer TVWS-Datenbank abgerufen wurde; und/oder wobei
der Zugangspunkt (105) ausgelegt ist, Geolokationsinformationen vom Endgerät (115, 120) zu empfangen, wenn das Endgerät dem Netzwerk (135) des Zugangspunkts (105) beitritt, oder ausgelegt ist, vom Endgerät (115, 120) an eine Geolokationsdatenbank verwiesen zu werden, insbesondere durch Bereitstellen einer eindeutigen Kennung.

3. Zugangspunkt (105) nach Anspruch 1 oder 2, wobei der eine oder die mehreren Prozessoren ferner ausgelegt sind, vor dem Übertragen der zweiten Nachricht auf der WIFI-Frequenz auf eine ein Hysteresefenster überschreitende Periode zu warten, wobei das Hysteresefenster einem Übergang von TVWS zu WIFI-Funktionalitäten auf einem oder mehreren Chips und einer oder mehreren Antennen entspricht.

4. Zugangspunkt (105) nach einem der Ansprüche 1 bis 3, der ferner eine zweite Antenne umfasst, die ausgelegt ist, ungerichtete drahtlose Kommunikation bereitzustellen, wobei ein Bereich der zweiten Antenne mehr als zwanzig Prozent eines Bereichs der ersten Antenne beträgt.

5. Zugangspunkt (105) nach einem der Ansprüche 1 bis 4, wobei ein Bereich der Antennenanordnung mindestens 90 Prozent des Bereichs der ersten Antenne beträgt.

6. Zugangspunkt nach einem der Ansprüche 1 bis 5, der ferner ausgelegt ist, Aufwärtsstreckenkommunikationen ausschließlich auf TVWS-Frequenzen vom Endgerät zu empfangen; und
Abwärtsstreckenkommunikationen ausschließlich auf WIFI-Frequenzen unter Verwendung der Strahllenkungskonfiguration an das Endgerät zu senden.

7. Benutzerkommunikationsvorrichtung (115, 120), umfassend:
mindestens einen Prozessor (1505);
mindestens einen Arbeitsspeicher (1510), der Anweisungen umfasst, die ausgelegt sind, zu bewirken, dass der mindestens eine Prozessor (1505) ausgelegt ist, über ein oder mehrere TVWS-Pakete einem Zugangspunkt (105) unter Verwendung einer TVWS-Frequenz Standortinformationen bereitzustellen, wobei die Standortinformationen in dem einen oder den mehreren TVWS-Paketen enthalten sind; und
unter Verwendung einer WIFI-Frequenz auf Grundlage der Standortinformationen strahlgelenkte Kommunikation zu empfangen.

8. Benutzerkommunikationsvorrichtung (115, 120) nach Anspruch 7, die ferner eine Anordnung (110) umfasst, die ausgelegt ist, unter Verwendung der WIFI-Frequenz und einer ungerichteten Antenne, die ausgelegt ist, unter Verwendung der TVWS-Frequenz Kommunikation bereitzustellen, strahlgelenkte Kommunikation bereitzustellen.

9. Benutzerkommunikationsvorrichtung (115, 120) nach Anspruch 7 oder 8, wobei die Standortinformationen eine eindeutige Kennung umfassen, die mit der Benutzerkommunikationsvorrichtung (115, 120) assoziiert ist.

10. Benutzerkommunikationsvorrichtung (115, 120) nach einem der Ansprüche 7 bis 9,
die ferner ausgelegt ist, ausschließlich auf TVWS-Frequenzen Aufwärtsstreckenkommunikationen an den Zugangspunkt zu senden; und Abwärtsstreckenkommunikationen ausschließlich auf WIFI-Frequenzen unter Verwendung der Strahllenkungskonfiguration vom Zugangspunkt zu empfangen.

11. Benutzerkommunikationsvorrichtung (115, 120) nach Anspruch 10, wobei die Abwärtsstreckenkommunikationen CSMA/CA-Signalgebung und Kanalsteuerungsdaten umfassen.

12. Computerimplementiertes Verfahren, umfassend:
Empfangen einer ersten Nachricht an einem Zugangspunkt (105) von einem Endgerät (115, 120) unter Verwendung einer TVWS-Frequenz;
Ermitteln von mit dem Endgerät (115, 120) assoziierten Standortinformationen;
wobei die Standortinformationen vom Endgerät (115, 120) über ein oder mehrere TVWS-Pakete oder durch Zugreifen auf eine Geolokationsdatenbank mit dem ungefähren Standort des Endgeräts auf Grundlage von einem oder
mehreren TVWS-Paketen empfangen werden;
Ermitteln einer Strahllenkungskonfiguration auf Grundlage der Standortinformationen; und
Übertragen einer zweiten Nachricht an das Endgerät (115, 120) unter Verwendung einer WIFI-Frequenz und unter Verwendung der Strahllenkungskonfiguration, wobei die Strahllenkungskonfiguration eine Antennenanordnung (110) einsetzt, die ausgelegt ist, auf Grundlage eines Kombinierens von Signalen von mehreren in der Antennenanordnung (110) enthaltenen Antennen eine Antennenverstärkung bereitzustellen.

13. Computerimplementiertes Verfahren nach Anspruch 12,
wobei die Standortinformationen eine Position sind, die aus einer TVWS-Datenbank abgerufen wurde, und/oder wobei
der Zugangspunkt (105) Geolokationsinformationen vom Endgerät (115, 120) empfängt, wenn das Endgerät (115, 120) dem Netzwerk (135) des Zugangspunkts (105) beitritt oder vom Endgerät (115, 120) an eine Geolokationsdatenbank verwiesen wird, insbesondere durch Bereitstellen einer eindeutigen Kennung.

14. Computerimplementiertes Verfahren nach Anspruch 12 oder 13, das ferner vor dem Übertragen der zweiten Nachricht auf der WIFI-Frequenz ein Warten auf eine ein Hysteresefenster überschreitende Periode umfasst, wobei das Hysteresefenster einem Übergang von TVWS zu WIFI-Funktionalitäten auf einem oder mehreren Chips und einer oder mehreren Antennen entspricht.

15. Computerimplementiertes Verfahren nach einem der Ansprüche 12 bis 14, wobei das Verfahren ferner umfasst:
Empfangen von Aufwärtsstreckenkommunikationen vom Endgerät ausschließlich auf TVWS-Frequenzen; und
Senden von Abwärtsstreckenkommunikationen an das Endgerät ausschließlich auf WIFI-Frequenzen unter Verwendung der Strahllenkungskonfiguration;
und/oder
wobei das Verfahren ferner ein Übertragen von CSMA/CA-Signalgebung und
Kanalsteuerungsdaten unter Verwendung der Strahllenkungskonfiguration umfasst.

## Revendications

1. Point d'accès (105), comprenant:
une première antenne configurée pour une émission à l'aide d'une fréquence d'espace blanc de télévision (TVWS);
un réseau d'antennes (110) configuré pour une émission directionnelle sur une fréquence WiFi, le réseau d'antennes (110) étant configuré pour fournir un gain d'antenne sur la base de signaux de combinaison provenant de multiples antennes incluses dans le réseau d'antennes (110); et
un ou plusieurs processeurs configurés pour:
recevoir un premier message à partir d'un dispositif d'utilisateur (115, 120) à l'aide d'une fréquence TVWS;
déterminer des informations d'emplacement associées au dispositif d'utilisateur (115, 120), les informations d'emplacement étant reçues à partir du dispositif d'utilisateur (115, 120) par l'intermédiaire d'un ou plusieurs paquets TVWS ou par accès à une base de données de géolocalisation avec l'emplacement approximatif du dispositif d'utilisateur sur la base d'un ou plusieurs paquets TVWS;
déterminer une configuration d'orientation de faisceau sur la base des informations d'emplacement; et
émettre un second message sur la fréquence WiFi au dispositif d'utilisateur (115, 120) à l'aide de la configuration d'orientation de faisceau et du réseau d'antennes (110).

2. Point d'accès (105) selon la revendication 1,
dans lequel les informations d'emplacement sont une position extraite à partir d'une base de données TVWS; et/ou dans lequel
le point d'accès (105) est configuré pour recevoir des informations de géolocalisation à partir du dispositif d'utilisateur (115, 120) lorsque le dispositif d'utilisateur rejoint le réseau (135) du point d'accès (105), ou est configuré pour être référé, par le dispositif d'utilisateur (115, 120), à une base de données de géolocalisation, en particulier par fourniture d'un identificateur unique.

3. Point d'accès (105) selon la revendication 1 ou 2, dans lequel le ou les processeurs sont en outre configurés pour attendre pendant une période supérieure à une fenêtre d'hystérésis avant l'émission du second message sur la fréquence WiFi, la fenêtre d'hystérésis correspondant à une transition de capacités TVWS à des capacités WiFi sur une ou plusieurs puces et une ou plusieurs antennes.

4. Point d'accès (105) selon l'une quelconque des revendications 1 à 3, comprenant en outre une deuxième antenne configurée pour fournir une communication sans fil omnidirectionnelle, une plage de la deuxième antenne étant supérieure à vingt pour-cent d'une plage de la première antenne.

5. Point d'accès (105) selon l'une quelconque des revendications 1 à 4, dans lequel une plage du réseau d'antennes est au moins 90 pour-cent de la plage de la première antenne.

6. Point d'accès selon l'une quelconque des revendications 1 à 5, configuré en outre pour recevoir des communications de liaison montante à partir du dispositif d'utilisateur exclusivement sur des fréquences TVWS; et envoyer des communications de liaison descendante au dispositif d'utilisateur exclusivement sur des fréquences WiFi à l'aide de la configuration d'orientation de faisceau.

7. Dispositif de communication d'utilisateur (115, 120), comprenant:
au moins un processeur (1505);
au moins une mémoire (1510) comprenant des instructions configurées pour amener l'au moins un processeur (1505) à fournir, par l'intermédiaire d'un ou plusieurs paquets TVWS, des informations d'emplacement à un point d'accès (105) à l'aide d'une fréquence TVWS, les informations d'emplacement étant incluses dans le ou les paquets TVWS; et
à recevoir une communication à orientation de faisceau à l'aide d'une fréquence WiFi sur la base des informations d'emplacement.

8. Dispositif de communication d'utilisateur (115, 120) selon la revendication 7, comprenant en outre un réseau (110) configuré pour fournir une communication à orientation de faisceau à l'aide de la fréquence WiFi et une antenne omnidirectionnelle configurée pour fournir une communication à l'aide de la fréquence TVWS.

9. Dispositif de communication d'utilisateur (115, 120) selon la revendication 7 ou 8, les informations d'emplacement comprenant un identificateur unique associé au dispositif de communication d'utilisateur (115, 120).

10. Dispositif de communication d'utilisateur (115, 120) selon l'une quelconque des revendications 7 à 9, en outre configuré pour envoyer des communications de liaison montante au point d'accès exclusivement sur des fréquences TVWS; et
recevoir des communications de liaison descendante à partir du point d'accès exclusivement sur des fréquences WiFi à l'aide de la configuration d'orientation de faisceau.

11. Dispositif de communication d'utilisateur (115, 120) selon la revendication 10, dans lequel les communications de liaison descendante comprennent une signalisation CSMA/CA et des données de commande de canal.

12. Procédé mis en oeuvre par ordinateur, comprenant:
recevoir, au niveau d'un point d'accès (105), un premier message à partir d'un dispositif d'utilisateur (115, 120) à l'aide d'une fréquence TVWS;
déterminer des informations d'emplacement associées au dispositif d'utilisateur (115, 120);
les informations d'emplacement étant reçues à partir du dispositif d'utilisateur (115, 120) par l'intermédiaire d'un ou plusieurs paquets TVWS ou par accès à une base de données de géolocalisation avec l'emplacement approximatif du dispositif d'utilisateur sur la base d'un ou plusieurs paquets TVWS;
déterminer une configuration d'orientation de faisceau sur la base des informations d'emplacement; et
émettre un second message à l'aide d'une fréquence WiFi au dispositif d'utilisateur (115, 120) à l'aide de la configuration d'orientation de faisceau, la configuration d'orientation de faisceau utilisant un réseau d'antennes (110) configuré pour fournir un gain d'antenne sur la base de signaux de combinaison provenant de multiples antennes incluses dans le réseau d'antennes (110).

13. Procédé mis en oeuvre par ordinateur selon la revendication 12,
dans lequel les informations d'emplacement sont une position extraite à partir d'une base de données TVWS et/ou dans lequel le point d'accès (105) reçoit des informations de géolocalisation à partir du dispositif d'utilisateur (115, 120) lorsque le dispositif d'utilisateur (115, 120) rejoint le réseau (135) du point d'accès (105), ou est référé, par le dispositif d'utilisateur (115, 120), à une base de données de géolocalisation, en particulier par fourniture d'un identificateur unique.

14. Procédé mis en oeuvre par ordinateur selon la revendication 12 ou 13, comprenant en outre l'attente pendant une période supérieure à une fenêtre d'hystérésis avant l'émission du second message sur la fréquence WiFi, la fenêtre d'hystérésis correspondant à une transition de capacités TVWS à des capacités WiFi sur une ou plusieurs puces et une ou plusieurs antennes.

15. Procédé mis en oeuvre par ordinateur selon l'une quelconque des revendications 12 à 14, le procédé comprenant en outre:
recevoir des communications de liaison montante à partir du dispositif d'utilisateur exclusivement sur des fréquences TVWS; et
envoyer des communications de liaison descendante au dispositif d'utilisateur exclusivement sur des fréquences WiFi à l'aide de la configuration d'orientation de faisceau; et/ou
le procédé comprenant en outre
émettre une signalisation CSMA/CA et des données de commande de canal à l'aide de la configuration d'orientation de faisceau.
